# EUROPÄISCHE PATENTANMELDUNG

(11) **EP 4 636 286 A1**
(43) Veröffentlichungstag der Anmeldung: **22.10.2025**
(21) Anmeldenummer: 25170617.2
(22) Anmeldetag: 15.04.2025
(51) Int. Cl.: F16J 15/34

(54) **DICHTUNG UND SYSTEM MIT EINER DICHTUNG**

(30) Priorität: 16.04.2024 DE 102024110644
(71) Anmelder: STASSKOL GmbH, 39418 Stassfurt (DE)
(72) Erfinder: Kranert, Dennis, 39439 Güsten (DE); Priegnitz, Ulrich, 39110 Magdeburg (DE); Gieraths, Hendrik, 39110 Magdeburg (DE)
(74) Vertreter: WSL Patentanwälte Partnerschaft mbB

(57) **Zusammenfassung**

Die vorliegende Erfindung betrifft eine Dichtung (10) sowie ein System (100) mit zwei zueinander rotierenden Komponenten (120, 140) und einer Dichtung (10).

## Beschreibung

Die vorliegende Erfindung betrifft eine Dichtung sowie ein System mit zwei zueinander rotierenden Komponenten und einer Dichtung.

Systeme der eingangs genannten Art werden abgedichtet, um zu verhindern, dass Medien unkontrolliert an den Grenzen zwischen rotierendem und stillstehendem Bauteil austreten. Hierbei kommen Dichtungen zum Einsatz. Dichtungen können entweder in Form einer Einzeldichtung oder als Dichtungspackungen vorliegen. Bei einer Dichtungspackung handelt es sich um mehrere in axialer Richtung hintereinander angeordnete Einzeldichtungen (auch Packungsringe genannt).

Aus der US 7,040,627 B1 und der US 7,178,806 B1 sind zwei Dichtungen für solche Systeme bekannt. Die US 6,305,693 B1 offenbart eine Dichtung für ein System mit einem Dichtring, der auf einer Welle angeordnet und in axialer Richtung von Druckfedern gegen eine Dichtfläche gedrückt wird. Weitere Dichtungen sind aus EP 4 006 354 A1, US 3,402,937, DE 699 736 C und CN 105971924 A bekannt.

Die aus dem Stand der Technik bekannten Lösungen sind insbesondere hinsichtlich ihrer langfristigen Dichtwirkung unbefriedigend. Es war daher Aufgabe der Erfindung, die Dichtwirkung von Dichtungen für Systeme mit zwei zueinander rotierenden Komponenten zu verbessern.

Die Lösung dieser Aufgabe ist eine Dichtung nach Anspruch 1.

Die erfindungsgemäße Dichtung ist zum Abdichten zwischen zwei relativ zueinander rotierenden Komponenten geeignet. Bei diesen Komponenten handelt es sich entweder um eine Welle und einen Stator oder um eine Achse und einen Rotor. Eine Welle ist ein Bauteil, das rotiert. Eine Achse hingegen rotiert nicht. Betrachtet wird dabei die globale Rotation, beispielsweise in einer Baugruppe oder einer Maschinenanlage. Zwischen Welle und Stator findet eine Relativrotation statt. Auch zwischen Achse und Rotor findet eine Relativrotation statt. Welle und Achse sind in der Regel zylindrische, oftmals längliche Bauteile.

Die Dichtung weist einen Hauptring und zwei Seitenringe auf. Diese Ringe weisen jeweils eine zentrale Durchgangsbohrung für die Achse oder die Welle auf und sind entlang einer Hauptachse X der Dichtung hintereinander angeordnet. Der Hauptring ist dabei zwischen den Seitenringen angeordnet. Dabei ist es jedoch auch möglich, dass sich die Ringe teilweise überlappen. Die Hauptachse X ist gleichzeitig die Drehachse der Welle oder des Rotors.

Jeder der Seitenringe liegt einerseits dichtend an dem Hauptring an und weist andererseits eine Dichtstelle zur Abdichtung gegenüber dem Stator oder dem Rotor auf. Der Hauptring weist eine Dichtstelle zur Abdichtung gegenüber der Achse oder der Welle auf. Bei den Dichtstellen kann es sich jeweils um eine Dichtlinie oder eine Dichtfläche handeln. In beiden Fällen verläuft die Dichtstelle kreisförmig um die Hauptachse X herum.

Die Ringe werden derart mit einer Federkraft beaufschlagt, dass die Seitenringe in axialer Richtung auseinandergedrückt werden und der Hauptring in Richtung der Welle oder Achse gedrückt wird. Mit anderen Worten werden die Ringe derart mit einer Federkraft beaufschlagt, dass sie an ihren Dichtstellen gegen den jeweiligen Dichtpartner gedrückt werden. Die Federkraft kann durch mindestens ein Federelement ausgeübt werden. Demnach ist bevorzugt mindestens ein Federelement vorgesehen, welches die Seitenringe in axialer Richtung auseinander und den Hauptring in Richtung der Welle oder Achse drückt.

Die Erfinder haben erkannt, dass auf diese Weise eine gleichsam einfache wie sichere Dichtung bereitgestellt werden kann. Die Ringe können jeweils so ausgestaltet werden, dass sie die ihr zugedachte Dichtungsfunktion sicher und dauerhaft ausüben. Durch die auf die Seitenringe ausgeübte Federkraft ist zudem ein Nachstellen bei Verschleiß möglich.

Durch die Dichtung wird sichergestellt, dass Stoffe wie beispielsweise ein Schmiermittel daran gehindert werden, entlang der Welle oder der Achse zu fließen.

Die Seitenringe und der Hauptring liegen bevorzugt an Flächen aneinander an, die jeweils senkrecht zu der Hauptachse X verlaufen. Auf diese Weise ist die Dichtwirkung zwischen Seitenringen und Hauptring am größten.

Die Dichtung kann bei bestimmungsgemäßem Gebrauch zwischen zwei Anlageflächen verpresst werden. Dabei wird bevorzugt der Hauptring oder ein Teil davon in axialer Richtung komprimiert. Der Hauptring und die Seitenringe liegen dann in axialer Richtung benachbart dichtend aneinander. Werden die Seitenringe aufgrund von Verschleiß und durch die Federkraft nach und nach auseinandergedrückt (sogenanntes Nachstellen), so entspannt sich der Hauptring mit der Zeit, ohne dass die Dichtstellen zwischen Hauptring und Seitenringen an Dichtwirkung verlieren. Bei diesem Nachstellen ist keine Relativbewegung von Hauptring einerseits und Welle oder Achse andererseits erforderlich, was im Stand der Technik oftmals notwendig war und aufgrund des Materials des Hauptrings zu einem ungleichmäßigen Nachstellen führte. Materialien mit einem hohen Reibungskoeffizienten bleiben bei einer solchen Relativbewegung an der Welle/Achse hängen.

Eine weitere Individualisierung der einzelnen Komponenten kann dadurch erzieltwerden, dass der Hauptring mehrteilig ist und einen radial innenliegenden Kernring sowie einen radial außen liegenden Außenring umfasst. Die Seitenringe liegen dann bevorzugt jeweils einerseits dichtend an dem Kernring an und andererseits weisen sie die Dichtstelle zur Abdichtung gegenüber dem Stator oder dem Rotor auf. Während der Kernring bevorzugt die Dichtstelle zur Welle oder Achse einerseits und zu den Seitenringen andererseits bereitstellt, kann beispielsweise der Außenring eine Vorspannung und damit eine Federkraft des Kernrings in Richtung der Welle oder Achse (mit-)bewirken.

Erfindungsgemäß ist vorgesehen, dass der Hauptring, insbesondere der Kernring, keine Relativbewegung zu der Welle oder der Achse vollführt Im Fall der Welle rotiert der Hauptring/Kernring also mit, im Fall der Achse ist der Hauptring/Kernring statisch. Dadurch wird insbesondere die Dichtstelle zwischen Hauptring/Kernring und Welle/Achse dicht gehalten, da jede Relativbewegung die Gefahr einer Leckage beinhaltet. Der Hauptring, insbesondere der Kernring, kann formschlüssig oder stoffschlüssig an der Welle oder der Achse befestigt sein. Beide Verbindungsarten bewirken eine besonders sichere Positionierung des Kernrings/Hauptrings an der Welle oder Achse. Es ist jedoch auch möglich, dass der Hauptring reibschlüssig an der Welle oder der Achse befestigt ist. In diesem Fall ist der Hauptring bevorzugt zumindest teilweise reibungsreich (hoher Reibungskoeffizient) und die Seitenringe sind relativ dazu reibungsarm (niedriger Reibungskoeffizient). Dabei ist insbesondere der Kernring reibungsreich und die Seitenringe reibungsarm. Der Außenring kann ebenfalls reibungsärmer als der Kernring sein, da es ausreichend ist, wenn nur der Kernring aus einem reibungsreichen Material hergestellt wird. Da sowohl der Hauptring/Kernring und die Seitenringe Dichtstellen bereitstellen, wird durch die genannte Auswahl der Reibungskoeffizienten sichergestellt, dass der Hauptring keine Relativbewegung zu der Welle oder Achse durchführt, die Seitenringe hingegen Relativbewegungen zu dem Rotor oder dem Stator vollführen können.

Der Hauptring, insbesondere der Kernring, ist zumindest teilweise aus einem Elastomer ausgebildet. Elastomere sind reibungsreich, weisen also einen hohen Reibungskoeffizienten auf. Die Seitenringe bestehen bevorzugt aus einem PTFE-basierten Material, einem PEEK-basierten Material oder einem kohlebasierten Material. Diese Materialien weisen niedrige Reibungskoeffizienten auf. Besonders kohlebasierte Materialien sind für Hochtemperaturanwendungen gut geeignet und weisen auch unter diesen Umständen gute Gleiteigenschaften auf. "basiert" bedeutet hier, dass das Material entweder aus dem betreffenden Stoff besteht oder diesen und andere Stoffe, beispielsweise Fasern, umfasst. Unter kohlebasierten Materialien (auch Carbonwerkstoffe genannt) werden insbesondere Werkstoffe verstanden, die als Hauptbestandteil unterschiedliche Kohlenstoffformen wie Kokse, Graphite, Ruße oder auch Kohlenstofffasern enthalten.

Der Außenring muss wie erwähnt keinen hohen Reibungskoeffizienten haben und kann daher aus einem PTFE-basierten Material, einem PEEK-basierten Material oder einem messingbasierten Material bestehen. Um zu ermöglichen, dass der Außenring eine Vorspannung des Kernrings bewirkt, besteht der Außenring bevorzugt aus einem Material mit einem E-Modul < 10.000 MPa. Ein Material mit einem niedrigen E-Modul bewirkt, dass die Federkräfte zur stärkeren Wirkung kommen.

Bei vorteilhaften Weiterbildungen ist der Hauptring, insbesondere der Kernring, gegenüber der Achse oder der Welle auf Untermaß gefertigt. Die zentrale Durchgangsbohrung des Hauptrings ist dann in entspanntem Zustand kleiner als der Außendurchmesser der Welle oder Achse. Zwischen dem Hauptring und der Welle oder Achse besteht dann nach der Montage eine Presspassung. Dieses Vorgehen eignet sich besonders dann, wenn der Hauptring oder der Kernring kraftschlüssig an der Welle oder Achse angeordnet wird. Die Presspassung verstärkt die Dichtstelle zur Welle/Achse.

Bei vorteilhaften Weiterbildungen ist der Hauptring spiegelsymmetrisch, insbesondere an einer Ebene senkrecht zur Hauptachse X und besonders im montierten Zustand. Durch diese Ausgestaltung wird es möglich, die Seitenringe baugleich auszubilden und gespiegelt an dem Hauptring anzuordnen. Durch die baugleiche Ausführung der Seitenringe wird deren Herstellung kostengünstiger.

Wie oben erwähnt wurde, werden die Seitenringe durch eine axial wirkende Federkraft auseinandergedrückt und der Hauptring wird durch eine in radialer Richtung wirkende Federkraft an die Welle oder Achse gedrückt. Diese beiden Federkräfte können durch unterschiedliche Federelemente bewirkt werden. Der Aufbau der erfindungsgemäßen Dichtung kann jedoch vereinfacht werden, indem ein Federelement so ausgestaltet und angeordnet wird, dass es sowohl eine axiale als auch eine radiale Kraft bewirkt. Bei vorteilhaften Weiterbildungen ist daher vorgesehen, dass der Hauptring, insbesondere der Außenring, wenigstens eine schräge Außenumfangsfläche aufweist, die einem Seitenring zugewandt ist. Durch die schräge Außenumfangsfläche kann eine Aufteilung oder Umlenkung einer Kraft erfolgen. Als schräg wird eine Außenumfangsfläche insbesondere dann angesehen, wenn sie in einem Winkel > 0° und < 90° zur Hauptachse X verläuft. Die schräge Außenumfangsfläche ist bevorzugt ein Teil einer Mantelfläche eines Kegels, der im Wesentlichen um die Hauptachse X aufgespannt ist und im Wesentlichen eine Grundfläche senkrecht zur Hauptachse X aufweist. Durch die Ausgestaltung auf Untermaß kann es hierbei zu geringfügigen Abweichungen kommen, die jedoch akzeptabel sind. Für eine gleichmäßige Kraftverteilung ist es von besonderem Vorteil, wenn der Hauptring zwei schräge Außenumfangsflächen aufweist, die jeweils einem der Seitenringe zugewandt sind.

Bei dem Federelement handelt es sich bevorzugt um eine Schlauchfeder. Die Schlauchfeder kann zwischen der schrägen Außenumfangsfläche und dem Seitenring angeordnet werden. In diesem Fall stützt sie sich auf der schrägen Außenumfangsfläche einerseits und dem Seitenring andererseits ab. Dadurch übt sie sowohl eine axiale Kraft auf den Seitenring sowie eine radiale Kraft auf den Hauptring aus. Im Falle zweier schräger Außenumfangsflächen werden bevorzugt zwei Schlauchfedern als Federelemente vorgesehen, die jeweils zwischen einer der schrägen Außenumfangsflächen und dem ihr zugewandten Seitenring angeordnet sind. Dies führt zu einer gleichmäßigen Kraftverteilung, durch die ein Kippen des Hauptrings vermieden werden kann.

Je nachdem, wie schräg die Außenumfangsfläche ausgebildet ist, findet eine unterschiedliche Kraftaufteilung in axiale Federkraft und radiale Federkraft statt. Sehr kleine oder sehr große Winkel haben sich dabei als ungenügend und unvorteilhaft hinsichtlich der Kraftaufteilung herausgestellt. Bevorzugt bildet die schräge Außenumfangsfläche daher mit der Hauptachse X einen Winkel zwischen 15° und 85°. Die Wahl des Winkels hängt auch von den weiteren Eigenschaften der Dichtung ab. Wird der Hauptring beispielsweise stoffschlüssig oder formschlüssig mit der Welle oder Achse verbunden, so ist keine wesentliche radiale Federkraft erforderlich. In diesem Fall kann der Winkel recht groß ausgeführt werden, beispielsweise zwischen 60° und 85°. Wird hingegen für die Seitenringe ein Material verwendet, welches eher starkem Verschleiß unterliegt, so kann die axiale Federkraft reduziert werden, indem ein kleiner Winkel, beispielsweise zwischen 5° und 30°, gewählt wird. Ein Winkel zwischen 30° und 60° stellt einen guten Kompromiss aus beiden Eigenschaften dar.

Für eine leichtere Montage der Seitenringe ist bevorzugt vorgesehen, dass zumindest ein Seitenring mehrteilig ist. Beispielsweise kann der Seitenring aus mehreren Ringsegmenten aufgebaut sein, wobei die Ringsegmente bevorzugt kraftschlüssig oder formschlüssig miteinander verbunden werden können, beispielsweise durch Verschrauben oder durch eine Puzzleverbindung.

Die erfindungsgemäße Dichtung ist derart aufgebaut, dass zwischen den Seitenringen einerseits und dem Stator oder Rotor andererseits eine Relativbewegung stattfinden kann. Um sicherzustellen, dass die Relativbewegung im Bereich der Dichtstellen der Seitenringe erfolgt und sich die Seitenringe nicht mit dem Rotor mitdrehen oder mit dem Stator stehenbleiben, ist bei vorteilhaften Weiterbildungen vorgesehen, dass mindestens ein Seitenring in Umfangsrichtung formschlüssig mit dem Hauptring, insbesondere dem Kernring, in Eingriff steht. Dabei ist es nicht zwingend erforderlich, dass Seitenring und Hauptring oder Kernring keinerlei Relativrotation erlauben. Insbesondere kann ein formschlüssiger Eingriff vorliegen, der jedoch ein gewisses Spiel zulässt. Da sich die Welle oder der Rotor bei den meisten Anwendungen nur in eine Richtung dreht und keinen Richtungswechsel vollführt, liegt der Seitenring dann während der Rotation an einer Flanke an dem Hauptring dauerhaft an, wohingegen eine gegenüberliegende Flanke einen Spalt in Umfangsrichtung zu dem Hauptring oder dem Kernring aufweist.

Für den Formschluss zwischen Hauptring und Seitenring ist bei vorteilhaften Weiterbildungen vorgesehen, dass der Hauptring mindestens einen axialen Vorsprung aufweist, der in eine axiale Aufnahme eines der Seitenringe hineinragt, oder umgekehrt. Dadurch wird eine in Umfangsrichtung formschlüssige Verbindung bewirkt, die wie oben dargelegt eine unerwünschte Relativrotation zwischen Hauptring und Seitenring verhindert. Besonders vorteilhaft hinsichtlich Herstellbarkeit, Kraftübertragung und Lebensdauer hat sich für den axialen Vorsprung und die axiale Aufnahme die Form eines Reuleaux-Dreiecks erwiesen. Eine besonders wirksame formschlüssige Verbindung wird erzielt, wenn der axiale Vorsprung und die axiale Aufnahme jeweils um die Durchgangsbohrung herum verlaufen. Aber auch mehrere einzelne Verbindungen sind möglich.

Bei vorteilhaften Weiterbildungen weist der Außenring in Umfangsrichtung einen Spalt auf. Dies erleichtert zunächst die Montage des Außenrings auf dem Kernring. Zudem ermöglicht es, dass der Außenring als Federelement wirkt. Hierzu wird der Außenring bei vorteilhaften Weiterbildungen auf Untermaß gegenüber dem Kernring hergestellt. Im entspannten Zustand weist der Außenring dabei einen Innendurchmesser auf, der kleiner ist, als der Außendurchmesser des Kernrings, insbesondere des Kernrings im montierten und/oder entspannten Zustand.

Der Kernring ist bevorzugt einteilig und in Umfangsrichtung unterbrochen und weist zwei Enden auf, die formschlüssig miteinander verbindbar sind. Dadurch kann der Kernring in Umfangsrichtung geschlossen werden. Eine einteilige Ausführung erleichtert die Montage, da nicht zwei zueinander passende Bauteile bereitgestellt werden müssen. Da der Kernring oftmals aus einem Elastomer hergestellt wird und dadurch flexibel ist, kann der Kernring auch leicht montiert werden, wenn er einteilig ist. Die Enden können eine akzeptable Abweichung des Kernrings von der spiegelsymmetrischen Ausgestaltung beinhalten. Im montierten Zustand ist der Kernring dennoch bevorzugt spiegelsymmetrisch.

Die Aufgabe der Erfindung wird auch durch ein System mit zwei zueinander rotierenden Komponenten sowie einer Dichtung gemäß der obigen Beschreibung gelöst. Bei den Komponenten handelt es sich insbesondere um eine Welle und einen Stator oder aber um eine Achse und einen Rotor. Der Stator oder der Rotor bildet in dem System zwei Anlageflächen, an denen jeweils einer der Seitenringe dichtend anliegt. Die Dichtstelle der Seitenringe befindet sich dann zwischen dem Seitenring und der dazugehörigen, also unmittelbar benachbarten Anlagefläche. Die Dichtstelle des Hauptrings oder Kernrings wird demnach zwischen dem Hauptring/Kernring und der Welle oder der Achse gebildet.

Die Dichtung wird bei vorteilhaften Weiterbildungen zwischen den Anlageflächen verpresst. Dabei wird insbesondere der Hauptring oder Kernring in axialer Richtung komprimiert. Der Hauptring oder Kernring und die Seitenringe liegen dann in axialer Richtung benachbart dichtend aneinander. Werden die Seitenringe durch zunehmenden Verschleiß nach und nach auseinandergedrückt, so entspannt sich der Hauptring oder der Kernring mit der Zeit, ohne dass die Dichtstelle zwischen Hauptring oder Kernring und Seitenring an Dichtwirkung verliert.

Bei vorteilhaften Weiterbildungen bildet der Rotor oder der Stator ein Gehäuse für die Dichtung oder weist ein solches auf. Dadurch kann die Dichtung in vordefinierte Art und Weise komprimiert und verpresst werden. Hierzu weist das Gehäuse bevorzugt eine entlang der Hauptachse X gemessene Innenlänge auf, die kleiner ist als die entlang der Hauptachse X gemessene Gesamtlänge der Dichtung (Außenseite des einen Seitenrings zu Außenseite des anderen Seitenrings) in entspanntem Zustand. Das Gehäuse kann ferner einen Einlass für ein Sperr- oder Spülgas aufweisen.

Weist die Dichtung eine schräge Außenumfangsfläche auf und ist auf dieser Außenumfangsfläche eine Schlauchfeder angeordnet, so wird die Schlauchfeder beim Verpressen der Dichtung zwischen den Anlageflächen nach außen aufgedehnt und vorgespannt. Dadurch bewirkt die Schlauchfeder bei bestimmungsgemäßem Gebrauch eine noch stärkere radiale Federkraft auf den Hauptring oder den Kernring sowie eine axiale Federkraft auf die Seitenringe.

Die Erfindung wird anhand der Zeichnungen beispielhaft dargestellt und erläutert. Die nachfolgend aufgeführten Figuren sind in den Zeichnungen dargestellt:
- Figur 1: ein System mit einer Dichtung gemäß einer ersten Ausführungsform in einer Schnittansicht,
- Figur 1a: das Detail A der Figur 1,
- Figur 2: eine Explosionszeichnung der Dichtung der Figur 1 in einer Perspektivansicht und
- Figur 3: ein System mit einer Dichtung gemäß einer zweiten Ausführungsform in einer Schnittansicht.

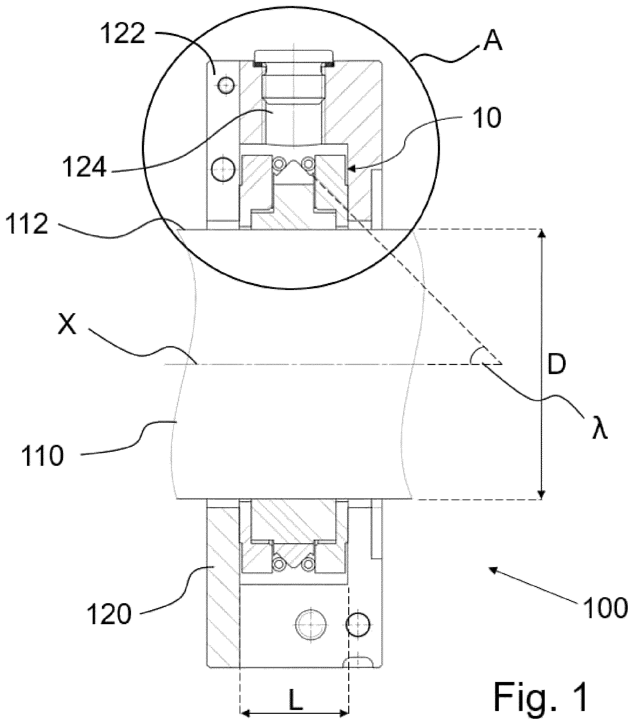

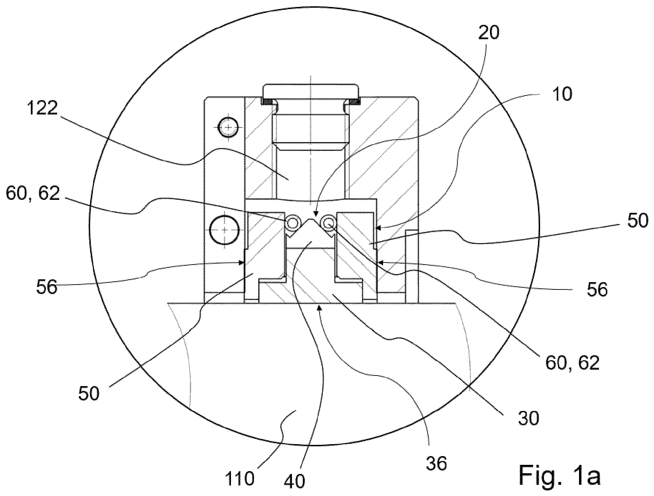

Das in der Figur 1 dargestellte System 100 weist eine zentral angeordnete Welle 110 und einen Stator 120 auf. Der Stator 120 ist um die Welle 110 herum angeordnet. Bei bestimmungsgemäßem Gebrauch rotiert die Welle 110 um ihre Hauptachse X. Der Stator 120 dreht sich nicht. Daher rotieren Welle 110 und Stator 120 relativ zueinander. Der Stator 120 umfasst ein Gehäuse 122 für eine Dichtung 10. In dem Gehäuse 122 ist ein Einlass 124 für Spülgas vorgesehen. Der Einlass 124 ist bei der hier gezeigten Ausführungsform durch einen eindrehbaren Stopfen verschlossen und kann bei Bedarf geöffnet werden kann, falls zusätzlich Sperrgas angeschlossen werden soll. Dadurch kann eine zusätzliche Sicherheit erreicht werden.

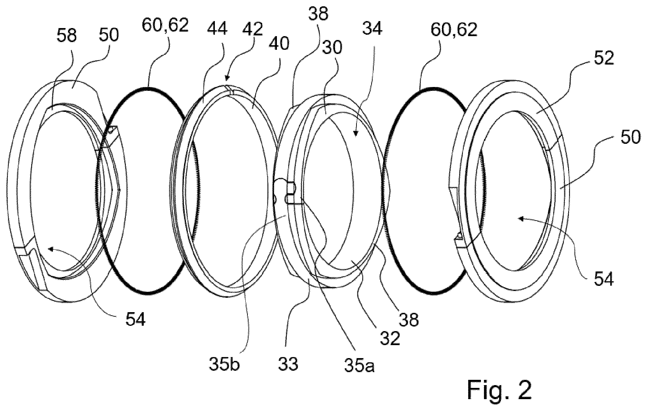

Aus der Figur 1a ist der Aufbau der Dichtung 10 zu entnehmen. Die Dichtung 10 umfasst einen Hauptring 20 und zwei Seitenringe 50. Der Hauptring 20 weist wiederum einen Kernring 30 und einen Außenring 40 auf. Der Hauptring 20 und die Seitenringe 50 sind entlang der Hauptachse X hintereinander angeordnet, wobei der Hauptring 20 zwischen den Seitenringen 50 angeordnet ist. Der Außenring 40 ist radial außerhalb von dem Kernring 30 angeordnet. Wie aus Figur 2 ersichtlich ist, weist der Kernring 30 eine Durchgangsbohrung 34 und die Seitenringe jeweils eine Durchgangsbohrung 54 auf. Die Welle 110 verläuft in dem System 100 durch die Durchgangsbohrungen 34, 54.

In Figur 1a ist zu erkennen, dass jeder Seitenring 50 einerseits dichtend an dem Hauptring 20, nämlich an dessen Kernring 30, anliegt und andererseits eine Dichtstelle 56 zur Abdichtung gegenüber dem Stator 120 aufweist. Die Dichtstelle 56 befindet sich an einer axialen Außenseite 52 des jeweiligen Seitenrings 50. Der Kernring 30 weist an seiner radial innenliegenden Umfangsfläche 32 eine Dichtstelle 36 zur Abdichtung gegenüber der Welle 110 auf. Der Außenring liegt auf einer radial außenliegenden Umfangsfläche 33 des Kernrings 30 auf.

Der Kernring 30 ist bei dieser Ausführungsform aus einem Elastomer hergestellt. Er ist ferner einteilig und in Umfangsrichtung unterbrochen und weist zwei Enden 35a, 35b auf, die formschlüssig miteinander verbindbar sind (siehe Figur 2). Der Innendurchmesser des Kernrings 30, also der Durchmesser der innenliegenden Umfangsfläche 32, ist im entspannten Zustand kleiner als ein Außendurchmesser D der Welle 110. Wird der Kernring 30 auf der Welle 110 angeordnet, liegt zwischen diesen Komponenten eine Presspassung vor. Dadurch wird der Kernring 30 fest auf der Welle 110 gehalten.

Der Hauptring 20 ist spiegelsymmetrisch an einer Ebene senkrecht zur Hauptachse X aufgebaut. Die Seitenring 50 sind baugleich, aber gespiegelt an dem Hauptring 20 angeordnet. Wie aus Figur 2 ersichtlich ist, sind die Seitenringe 50 mehrteilig. Beide Seitenringe 50 bestehen aus jeweils zwei Teilen, die zwecks Montage miteinander verschraubt werden.

Die Seitenringe 50 bestehen bei der hier gezeigten Ausführungsform aus einem PTFE-basierten Material. Dieses Material ist im Vergleich zu dem Elastomermaterial des Kernrings 30 reibungsarm. Dreht sich die Welle 110 bei bestimmungsgemäßem Gebrauch, so wird der reibschlüssig an der Welle 110 angebrachte Kernring 30 mitgedreht. Da der Kernring 30 und die Seitenringe 50 fest aneinander anliegen, werden auch die Seitenringe 50 mitgedreht. Aufgrund des niedrigen Reibungskoeffizienten der Seitenringe 50 drehen diese sich an ihren Dichtstellen 56 gegenüber dem Stator 120.

Der Außenring 40 besteht bei der hier gezeigten Ausführungsform aus einem PEEK-basierten Material. Wie aus Figur 2 ersichtlich ist, ist der Außenring 40 einteilig und weist in Umfangsrichtung einen Spalt 42 auf. Der Innendurchmesser des Außenrings 40 ist kleiner als der Außendurchmesser des Kernrings 30 in dem montierten Zustand, in welchem der Kernring 30 an der Welle 110 angebracht ist. Zur Montage wird der Außenring 40 daher gedehnt, was aufgrund des Spalts 42 möglich ist. Sodann wird der Außenring 40 außen auf dem Kernring 30 angeordnet. Aufgrund der Dimensionierung kann sich der Außenring 40 nicht vollständig in den entspannten Zustand zurückverformen und wirkt dadurch eine radial nach innen gerichtete Kraft auf den Kernring 30 aus. Dies führt dazu, dass der Kernring 30 noch fester auf die Welle 110 gedrückt wird.

Der Außenring 40 weist zwei schräge Außenflächen 44 auf. Die schrägen Außenumfangsflächen 44 verlaufen jeweils in einem Winkel λ von etwa 45° relativ zu der Hauptachse X (siehe Figur 1). Jede der Außenumfangsflächen 44 ist einem Seitenring 50 zugewandt. Dadurch wird jeweils zwischen einer Außenumfangsfläche 44 und einem Seitenring 50 eine um die Hauptachse X verlaufende Nut gebildet.

In jeder dieser Nuten ist jeweils eine Schlauchfeder 62 als Federelement 60 angeordnet. Bei den Schlauchfedern 62 handelt es sich um eine endlose Spiralfeder, die kreisförmig verläuft. Die Schlauchfedern 62 sind derart dimensioniert, dass sie aufgedehnt werden müssen, damit sie in den Nuten angeordnet werden können. Die Schlauchfedern 62 bewirken dadurch primär eine radial nach innen gerichtete Federkraft auf den Außenring 40 und dadurch auf den Kernring 30. Der Kernring 30 wird dadurch weiter an die Welle 110 gepresst. Aufgrund der schrägen Außenumfangsflächen 44 wird ein Teil der nach innen gerichteten Federkraft der Schlauchfedern 62 umgelenkt und wirkt in axialer Richtung auf die Seitenringe 50. Die Seitenringe 50 werden dadurch in axialer Richtung auseinandergedrückt und insbesondere an eine Innenseite des Gehäuses 122 gedrückt. Dadurch wird die Dichtwirkung an den Dichtstellen 56 verstärkt.

Das Gehäuse 122 weist im Innern einen Freiraum auf, der in Axialrichtung eine Länge L aufweist. Die beiden Seitenringe 50 und der Kernring 30 weisen in entspanntem Zustand eine Gesamtlänge entlang der Hauptachse X auf, die größer ist als die Länge L. Wird die Dichtung 10 in dem Gehäuse 122 angeordnet, so werden die Seitenringe 50 und der Kernring 30 daher in axialer Richtung zusammengepresst. Insbesondere wird der Kernring 30 aufgrund seiner elastomeren Eigenschaften komprimiert. Auch dadurch wird Dichtwirkung an den Dichtstellen 56 sowie an den Dichtstellen zwischen den Seitenringen 50 und dem Kernring 30 verstärkt.

Der Kernring 30 weist zwei axiale Vorsprünge 38 auf, die die Form eines Reuleaux-Dreiecks aufweisen und um die Durchgangsbohrung 34 herum verlaufen. Die Seitenringe 50 weisen jeweils eine axiale Aufnahme 58 auf, die ebenfalls die Form eines Reuleaux-Dreiecks aufweisen und um die Durchgangsbohrung 54 herum verlaufen. Die axialen Vorsprünge 38 und die axialen Aufnahmen 58 sind komplementär ausgebildet. In montiertem Zustand (siehe Figur 1) ragen die axialen Vorsprünge 38 jeweils in eine axiale Aufnahme 58. Der Kernring 30 und die Seitenringe 50 sind auf diese Weise in Umfangsrichtung formschlüssig miteinander verbunden. Dadurch wird sichergestellt, dass sich bei einer Rotation der Welle 120 neben dem Kernring 30 auch die Seitenringe 50 drehen.

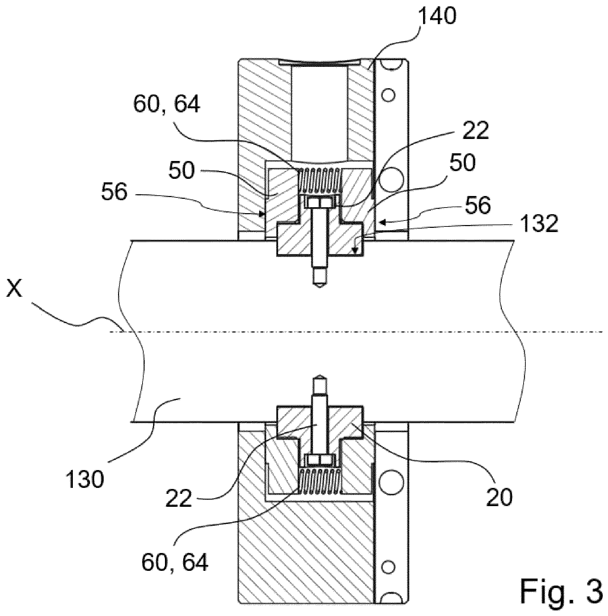

Figur 3 zeigt eine andere Ausführungsform eines Systems 100. Bei dieser Ausführungsform umfasst das System 100 eine Achse 130 und einen Rotor 140. Die zentral angeordnete Achse 130 ist hier statisch und der um die Achse 130 herum angeordnete Rotor 140 rotiert bei bestimmungsgemäßem Gebrauch.

Im Innern des Rotors 140 ist eine Dichtung 10 angeordnet, die einen Hauptring 20 und zwei Seitenringe 50 umfasst. Der Hauptring 20 ist bei dieser Ausführungsform einteilig. Er ist aber wie der Kernring 30 der ersten Ausführungsform in Umfangsrichtung unterbrochen und weist zwei komplementäre Enden auf, die formschlüssig miteinander verbunden werden können. Der Hauptring 20 ist bei dieser Ausführungsform mittels Schrauben 22 form- und kraftschlüssig mit der Achse 130 verbunden. Die Achse 130 weist hierzu eine in Umfangsrichtung verlaufende Nut 132 auf, in welcher der Hauptring 20 angeordnet wird.

Durch die kraft- und formschlüssige Verbindung von Hauptring 20 und Achse 130 ist sichergestellt, dass auch der Hauptring 20 statisch ist.

Der Hauptring 20 ist spiegelsymmetrisch an einer Ebene senkrecht zur Hauptachse X ausgestaltet. Die Seitenringe 50 sind identisch ausgestaltet und liegen jeweils dichtend an dem Hauptring 20 an. Die Seitenringe 50 liegen zudem jeweils an Dichtstellen 56 an einer Innenseite des Rotors 140 an. Zur Verstärkung der Dichtwirkung an diesen Dichtstellen 56 ist ein Federelement 60 in Form einer Druckfeder 64 vorgesehen. Die Druckfeder 64 wirkt direkt auf die Seitenringe 50 und drückt diese in axialer Richtung auseinander.

Durch die Dichtung 10 wird sichergestellt, dass Stoffe wie beispielsweise ein Schmiermittel entlang der Welle 110 oder der Achse 130 fließen können.

### Bezugszeichenliste

- 10: Dichtung
- 20: Hauptring
- 22: Schraube
- 30: Kernring
- 32: innenliegende Umfangsfläche
- 33: außenliegende Umfangsfläche
- 34: Durchgangsbohrung
- 35a, 35b: Ende
- 36: Dichtstelle
- 38: axialer Vorsprung
- 40: Außenring
- 42: Spalt
- 44: Außenumfangsfläche
- 50: Seitenring
- 52: Außenseite
- 54: Durchgangsbohrung
- 56: Dichtstelle
- 58: axiale Aufnahme
- 60: Federelement
- 62: Schlauchfeder
- 64: Druckfeder
- 100: System
- 110: Welle
- 112: Mantel
- 120: Stator
- 122: Gehäuse
- 124: Einlass
- 130: Achse
- 132: Nut
- 140: Rotor
- D: Durchmesser
- L: Länge
- X: Hauptachse
- λ: Winkel

## Patentansprüche

1. Dichtung zum Abdichten zwischen zwei relativ zueinander rotierenden Komponenten, insbesondere zwischen einer Welle und einem Stator oder zwischen einer Achse und einem Rotor,
wobei die Dichtung einen Hauptring und zwei Seitenringe umfasst,
wobei die Ringe jeweils eine zentrale Durchgangsbohrung für die Achse oder die Welle aufweisen und entlang einer Hauptachse X hintereinander angeordnet sind, wobei der Hauptring zwischen den Seitenringen angeordnet ist,
wobei jeder Seitenring einerseits dichtend an dem Hauptring anliegt und andererseits eine Dichtstelle zur Abdichtung gegenüber dem Stator oder dem Rotor aufweist,
wobei der Hauptring eine Dichtstelle zur Abdichtung gegenüber der Achse oder der Welle aufweist, und
wobei die Ringe derart mit einer Federkraft beaufschlagt werden, dass die Seitenringe in axialer Richtung auseinander gedrückt werden und der Hauptring in Richtung der Welle oder Achse gedrückt wird.

2. Dichtung nach Anspruch 1, **dadurch gekennzeichnet, dass** der Hauptring mehrteilig ist und einen radial innenliegenden Kernring sowie einen radial außenliegenden Außenring umfasst, wobei die Seitenringe jeweils einerseits dichtend an dem Kernring anliegen und andererseits eine Dichtstelle zur Abdichtung gegenüber dem Stator oder dem Rotor aufweisen.

3. Dichtung nach Anspruch 1 oder 2, **dadurch gekennzeichnet, dass** der Hauptring, insbesondere der Kernring, formschlüssig oder stoffschlüssig an der Welle oder der Achse befestigt ist.

4. Dichtung nach Anspruch 1 oder 2, **dadurch gekennzeichnet, dass** der Hauptring zumindest teilweise reibungsreich und die Seitenringe reibungsarm sind, wobei insbesondere der Kernring reibungsreich ist und die Seitenringe reibungsarm sind.

5. Dichtung nach einem der vorhergehenden Ansprüche, **dadurch gekennzeichnet, dass** der Hauptring, insbesondere der Kernring, zumindest teilweise aus einem Elastomer besteht und/oder die Seitenringe aus einem PTFE-basierten Material, einem PEEK-basierten Material oder einem kohlebasierten Material bestehen und/oder der Außenring aus einem PTFE-basierten Material, einem PEEK-basierten Material oder einem messingbasierten Material besteht.

6. Dichtung nach einem der vorhergehenden Ansprüche, **dadurch gekennzeichnet, dass** der Hauptring, insbesondere der Kernring, gegenüber der Achse oder der Welle, auf Untermaß gefertigt ist und dadurch kraftschlüssig auf der Achse oder Welle sitzt..

7. Dichtung nach einem der vorhergehenden Ansprüche, **dadurch gekennzeichnet, dass** der Hauptring spiegelsymmetrisch ist, insbesondere an einer Ebene senkrecht zur Hauptachse X und dass die Seitenringe baugleich, aber gespiegelt angeordnet sind.

8. Dichtung nach einem der vorhergehenden Ansprüche, **dadurch gekennzeichnet, dass** der Hauptring, insbesondere der Außenring, wenigstens eine schräge Außenumfangsfläche aufweist, die einem Seitenring zugewandt ist, wobei bevorzugt zwei schräge Außenumfangsflächen vorgesehen sind, die jeweils einem der Seitenringe zugewandt sind.

9. Dichtung nach einem der vorhergehenden Ansprüche, **dadurch gekennzeichnet, dass** das Federelement eine Schlauchfeder ist, die zwischen der schrägen Außenumfangsfläche und dem Seitenring angeordnet ist, wobei bevorzugt zwei Schlauchfedern als Federelemente vorgesehen sind, die jeweils zwischen einer der schrägen Außenumfangsflächen und dem ihr zugewandten Seitenring angeordnet sind, wobei die schräge Außenumfangsfläche mit der Hauptachse X einen Winkel zwischen 15° und 75° bildet.

10. Dichtung nach einem der vorhergehenden Ansprüche, **dadurch gekennzeichnet, dass** zumindest ein Seitenring mehrteilig ist.

11. Dichtung nach einem der vorhergehenden Ansprüche, **dadurch gekennzeichnet, dass** mindestens ein Seitenring in Umfangsrichtung formschlüssig mit dem Hauptring, insbesondere dem Kernring, in Eingriff steht, wobei der Hauptring mindestens einen axialen Vorsprung aufweist, der in eine axiale Aufnahme des Seitenrings hineinragt, oder umgekehrt, wobei bevorzugt der axiale Vorsprung und die axiale Aufnahme die Form eines Reuleaux-Dreiecks aufweisen und/oder um die Durchgangsbohrung herum verlaufen.

12. Dichtung nach einem der vorhergehenden Ansprüche, **dadurch gekennzeichnet, dass** der Außenring in Umfangsrichtung einen Spalt aufweist.

13. Dichtung nach einem der vorhergehenden Ansprüche, **dadurch gekennzeichnet, dass** der Hauptring und/oder der Kernring einteilig und in Umfangsrichtung unterbrochen ist und zwei Enden aufweist, die formschlüssig miteinander verbindbar sind.

14. System mit zwei zueinander rotierenden Komponenten, insbesondere einer Welle und einem Stator oder einer Achse und einem Rotor, sowie einer Dichtung gemäß einem der vorhergehenden Ansprüche, wobei der Stator oder der Rotor zwei Anlageflächen bildet, an denen jeweils einer der Seitenringe dichtend anliegt, wobei die Dichtung bevorzugt zwischen den Anlageflächen verpresst wird.

15. System nach Anspruch 14, **dadurch gekennzeichnet, dass** der Stator oder der Rotor ein Gehäuse für die Dichtung bildet und einen Einlass für ein Sperr- oder Spülgas aufweist.
